# EUROPEAN PATENT SPECIFICATION

(11) **EP 1 788 318 B1**
(45) Date of publication and mention of the grant of the patent: **09.03.2016**
(21) Application number: 06015597.5
(22) Date of filing: 26.07.2006
(51) Int. Cl.: F24F 11/00

(54) **Air conditioning system**
Klimaanlage
Sytème de conditionnement d'air

(30) Priority: 17.11.2005 KR 20050110099; 17.11.2005 KR 20050110100; 17.11.2005 KR 20050110101
(43) Date of publication of application: 23.05.2007
(73) Proprietor: LG Electronics Inc., Seoul 150-721 (KR)
(72) Inventor: Song, Chang Hyun, Pusan-si Gyeongsangnam-do (KR); Choi, Sun Hee, Masan-si Gyeongsangnam-do (KR); Park, Jong Hoon, Changwon-si Kyungsangnam-do, 641-711 (KR); Kang, Dong Hoon, Pusan-si Gyeongsangnam-do (KR)
(74) Representative: Ter Meer Steinmeister & Partner

(56) References cited:
- EP-A1- 1 258 688
- WO-A1-01/48425
- WO-A1-03/046446
- DE-U1-202005 000 661
- GB-A- 2 361 055
- US-A- 4 952 283
- US-A- 5 947 371
- US-A- 6 095 427
- US-A1- 2002 072 322
- US-A1- 2002 139 514
- US-A1- 2005 095 978
- US-A1- 2005 149 232
- US-B1- 6 578 770

## Description

The present invention relates to an air conditioning system and more particularly, to an air conditioning system that automatically performs air cleaning and ventilation using a pollutant sensor.

### Description of the Related Art

When a living thing breathes in a closed space, carbon dioxide increases with time, and thus it becomes more difficult for the living thing to breathe in the closed space. Therefore, closed spaces, such as an office where a lot of people works together or the interior of a car, should be periodically ventilated. A ventilation system can be generally used for this purpose.

Such a ventilation system is generally installed on a floor or a ceiling to allow inflow of outdoor air and outflow of indoor air. The ventilation system is useful, particularly for places where natural ventilation is poor or many persons stay.

However, only an air cleaning unit or ventilation device is provided in the related art ventilation system. Therefore, for example, when the ventilation device operates in winter, heating efficiency is deteriorated since cold outdoor air is directly introduced into an indoor area.

Further, since the air cleaning unit does not have a ventilation function, an indoor area cannot be ventilated using the air cleaning unit. In addition, air cleaning and ventilation are not automatically performed based on the pollution level of indoor air.

Document D1 (US 4,952,283 A) describes an apparatus for ventilation, recovery of heat, dehumidification and cooling of air. The apparatus comprises a matrix container, a stationary matrix, an air fan, and a variable timer controller. A ducting is attached to a housing of the air fan for intake of exhaust air from a duct and discharge of fresh air into a duct. An air filter being a conventional wet filter - humidifier - is located between a screen in the matrix container and the air fan housing. The wet filter includes a water pump, a water container, a water level controller, a water line, a water distribution channel, a make up water line and water sink. The air fan further includes an axial type propeller and a reversible electric motor secured to the housing. When the air fan propeller rotates in one direction it draws air from outdoor through a matrix, when it rotates in the opposite direction it forces the exhaust air through the matrix to outdoor.

The variable timer controller includes a variable timer, and a series of relays interconnected with the air fan, a damper, the water pump and a heater, room thermostat and/or humidistat and maintains the operation of the apparatus in four different modes required to maintain comfort in the building during the winter - heating season, summer - cooling season, and the rest of the year - ventilating season. Since the apparatus is required to provide recovery of energy, dehumidification, cooling and ventilation functions, the controller has the capability to control and maintain the operation of the apparatus in four operating modes including energy recovery, dehumidification, cooling and ventilation.

### SUMMARY OF THE INVENTION

Accordingly, the present invention is directed to an air conditioning system that substantially obviates one or more problems due to limitations and disadvantages of the related art.

An object of the present invention is to provide an air conditioning system that can perform ventilation and air cleaning simultaneously or individually for maintaining indoor air clean.

Another object of the present invention is to provide an air conditioning system that can perform automatic mode for automatically providing ventilation and air cleaning functions simultaneously or individually and perform manual mode for providing ventilation and/or air cleaning functions in response to an instruction inputted by a user.

These objects are solved by the air conditioning system according to claim 1. Further advantageous refinements and embodiments of the present invention are described in the respective dependent claims.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
Fig. 1 is a perspective view of an air cleaning unit included in an air conditioning system according to the present invention;
Fig. 2 is an exploded perspective view of the air cleaning unit depicted in Fig. 1;
Fig. 3 is an exploded perspective view showing an air flow of the air cleaning unit in ventilation mode;
Fig. 4 is a perspective view showing an air flow of the air cleaning unit in cleaning mode;
Fig. 5 is a perspective view of an air conditioning system according to the present invention;
Fig. 6 is a sectional view showing a schematic air flow of the air conditioning system shown in Fig. 5;
Fig. 7 is a plan view of a controller of an air conditioning system according to the present invention;
Fig. 8 is a block diagram of an air conditioning system according to the present invention;
Fig. 9 is a flowchart illustrating a method of controlling an air conditioning system;
Fig. 10 is a flowchart illustrating a process of determining the air volume rate of a fan when an automatic mode is selected for the air conditioning system;
Fig. 11 is a flowchart illustrating a process of determining a pollution level using a VOC sensor when the air conditioning system operates in automatic mode;
Fig. 12 is a flowchart illustrating a process of determining a pollution level using a gas sensor when the air conditioning system operates in automatic mode;
Fig. 13 is a flowchart illustrating a process of determining a pollution level using a CO2 sensor when the air conditioning system operates in automatic mode; and
Fig. 14 is a flowchart illustrating a process of determining the air volume output of a fan when the air conditioning system operates in automatic mode.

### DETAILED DESCRIPTION OF THE INVENTION

Reference will now be made in detail to the preferred embodiments of the present invention, examples of which are illustrated in the accompanying drawings.

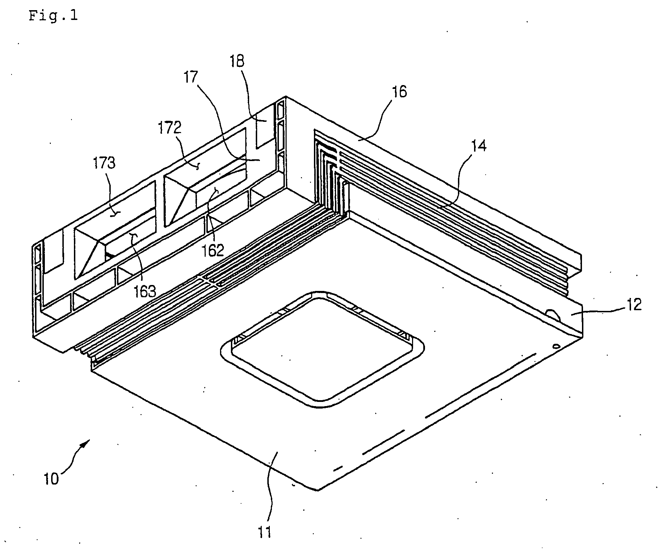

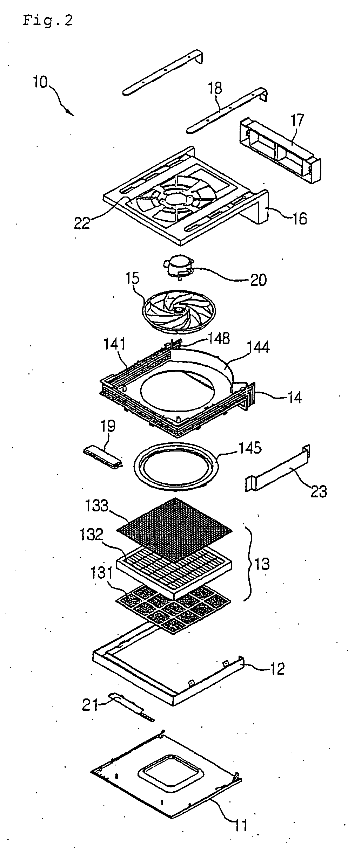

Fig. 1 is a perspective view of an air cleaning unit 10 included in an air conditioning system according to the present invention, and Fig. 2 is an exploded perspective view of the air cleaning unit 10.

Referring to Figs. 1 and 2, the air cleaning unit 10 includes: a front cover 11 having an air suction hole in a center portions; a cover guide 12 on which the front cover 11 is mounted; a grill 14 having cleaned air discharge holes on lateral sides and on which the cover guide 12 is slidably mounted; a filter 13 disposed in a lower portion of the grill 14 to remove impurities and odors from air; a control box 19 coupled to a lower edge of the grill 14; a control panel 21 detachably coupled to a lower portion of the cover guide 12; and a shield member 23 selectively shields screening the cleaned air discharge holes formed on the lateral sides of the grill 14. In detail, a main printed circuit board (PCB) substrate is disposed in the control box 19 for controlling the operation of the air cleaning unit 10, and a display PCB substrate is mounted on one side of a rear surface of the control panel 21 for display the operational state of the air cleaning unit 10. When the air cleaning unit 10 is installed between a wall and a ceiling, the cleaned air discharge holes of the grill 14 facing the wall is screened by the shield member 23. In this case, air is discharged through the discharge holes located on a front and an opposite side of the grill 14.

The air cleaning unit 10 further includes a fan 15 disposed above the filter 13 for drawing indoor or outdoor air into the air cleaning unit 10, a shroud 145 detachably coupled to a lower portion of the grill 14 for guiding the air drawn by the fan 15, a fan motor 20 driving the fan 15, and a rear panel 16 having one side connected to an exhaust duct and a supply duct. The fan motor 20 is mounted on the rear panel 16.

The air cleaning unit 10 further includes a base panel 22 mounted on a top surface of the rear panel 16 for strengthen the rear panel 16, an installation case 17 coupled to one side of the rear panel 16 for allowing the rear panel 16 to be easily connected to the exhaust duct and the supply duct, and installation bars 18 detachably coupled to a top portion of the rear panel 16 for allowing the rear panel 16 to be easily mounted on a wall or a ceiling. In detail, the installation case 17 includes a suction hole allowing inflow of indoor air and an exhaust hole 172 for expelling indoor air to an outdoor area. The rear panel 16 includes a suction hole 163 and an exhaust hole that are formed in correspondence with the suction hole 173 and the exhaust hole 172 of the installation case 17. Therefore, indoor air and outdoor air can flow into and out of the air cleaning unit 10 through the suction holes 163 and 173 and the exhaust holes 162 and 172.

Hereinafter, an air flow throughout the air cleaning unit 10 installed in an indoor area will be described with reference to the accompanying drawings according to ventilation mode and cleaning mode of the air cleaning unit 10.

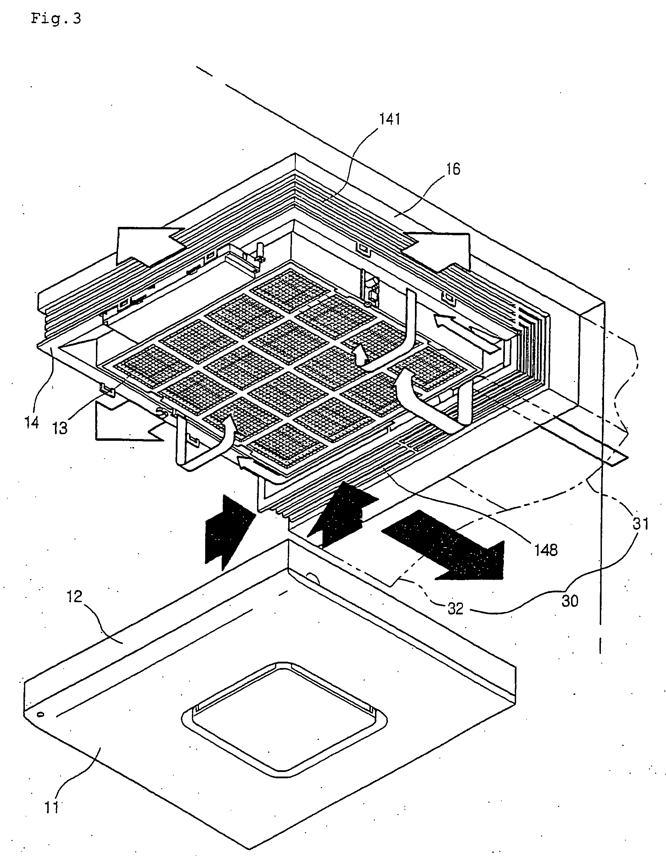

Fig. 3 is an exploded perspective view showing an air flow throughout the air cleaning unit 10 in ventilation mode.

Referring to Fig. 3, the air cleaning unit 10 is mounted on a ceiling, and the suction and exhaust holes 173 and 172 of the installation case 17 are connected to a duct member 30 running through a wall. Here, the air cleaning unit 10 can be connected to a duct member running through a ceiling by using differently-shaped installation case. Description of the differently-shaped installation case will be omitted.

In detail, the duct member 30 includes a supply duct 31 allowing indoor air to flow into the air cleaning unit 10 and an exhaust duct 32 allowing indoor air to flow to an outdoor area.

In more detail, in ventilation mode, outdoor air is introduced from the supply duct 31 into the air cleaning unit 10 through the suction hole 173 of the installation case 17 and the suction hole 163 of the rear panel 16. Next, the outdoor air is cleaned while passing through the filter 13 disposed inside the grill 14 in a bottom-to-top direction of the filter 13. The cleaned outdoor air further flows between the grill 14 and the rear panel 16. Then, the cleaned outdoor air is horizontally discharged by the fan 15 to an indoor area through a discharge grill 141 formed on side portions of the grill 14.

Meanwhile, in the ventilation mode, indoor air is sucked into the air cleaning unit 10 through an exhaust grill 148 formed on a corner portion of the grill 14. The exhaust grill 148 is formed at a position corresponding to the exhaust hole 162 of the rear panel 16 and bent along an edge of the exhaust hole 162. The indoor air sucked into the air cleaning unit 10 through the exhaust grill 148 is expelled to an outdoor area through the exhaust holes 162 and 172 and the exhaust duct 32.

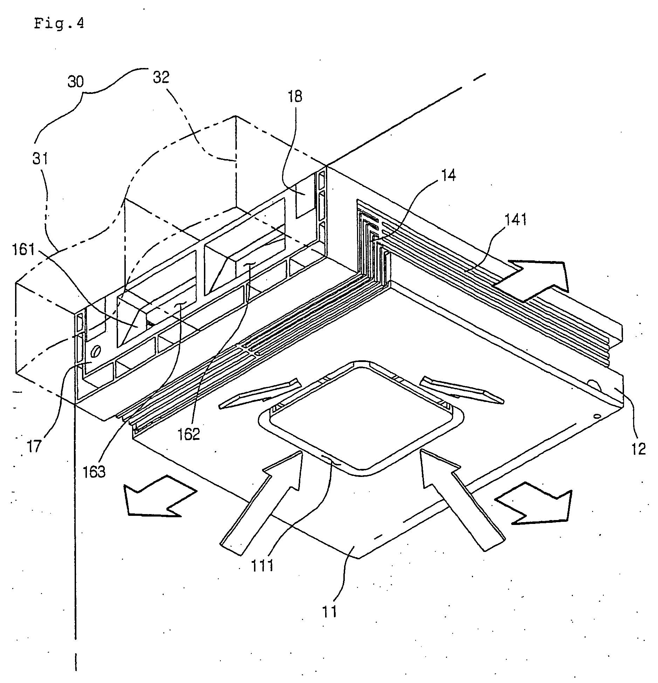

Fig. 4 is a perspective view showing an air flow throughout the air cleaning unit 10 in cleaning mode.

Referring to Fig. 4, in cleaning mode of the air cleaning unit 10, outdoor air and indoor air do not flow through the supply duct 31 and the exhaust duct 32 since a heat recovery ventilator (described later) connected to the duct member 30 is not operated in the cleaning mode. The heat recovery ventilator will be described later in detail.

Specifically, in the cleaning mode, indoor air is sucked into the air cleaning unit 10 through the indoor air suction hole 111 formed in the front cover 11. The sucked indoor air is cleaned while passing through the filter 13. Then, the indoor air is discharged back to an indoor area through the discharge grill 141 of the grill 14.

More specifically, when the cleaning mode is selected, indoor air is taken by the fan 15 into the air cleaning unit 10 through the indoor air suction hole 111. The sucked indoor air is cleaned while passing through the filter 13 and flows to the fan 15 through the orifice 143. Then, the cleaned indoor air is pushed by the fan 5 in a horizontal direction and guided by an air guide 144 (refer to Fig. 2) to the discharge grill 141 where the indoor air is discharged back to the indoor area.

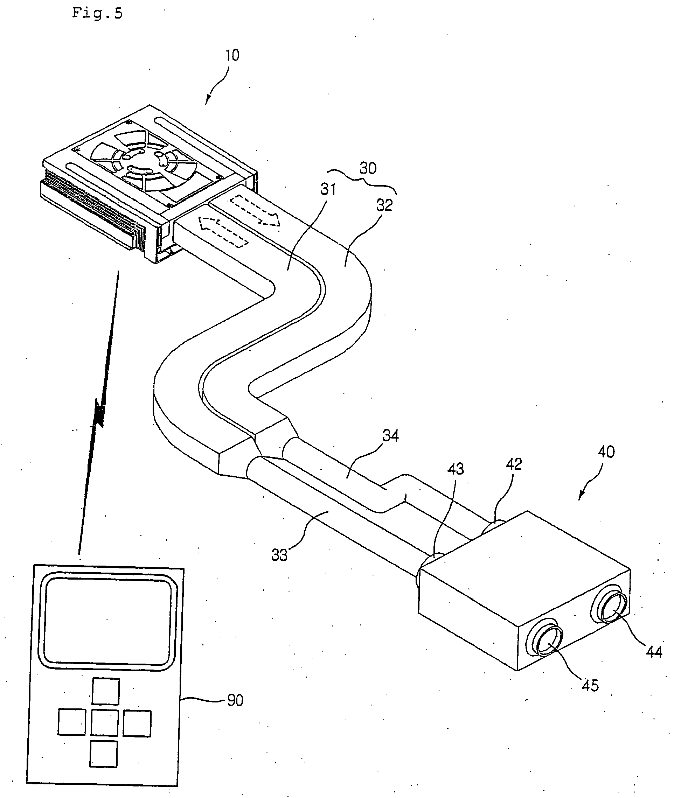

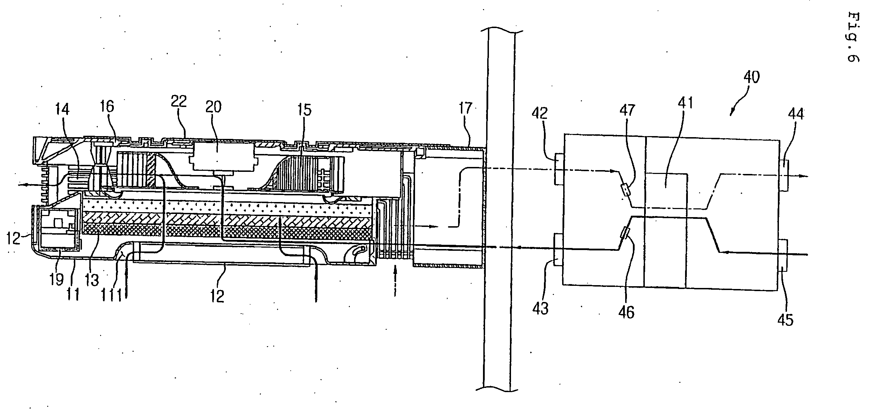

Fig. 5 is a perspective view of an air conditioning system according to the present invention, and Fig. 6 is a sectional view showing a schematic air flow of the air conditioning system shown in Fig. 5.

Referring to Figs. 5 and 6, the air conditioning system of the present invention includes an air cleaning unit 10, a ventilation unit such as a heat recovery ventilator 40 connected to the air cleaning unit 10 through a duct member 30, and a controller 90 connected to the air cleaning unit 10 via radio waves or a cable.

In detail, the duct member 30 includes a supply duct 31 and an exhaust duct 32. On end of the duct member 30 is connected to a suction hole 173 and an exhaust hole 172, and the other end of the duct member 30 is connected to the heat recovery ventilator 40. A supply duct connecting tube 33 and an exhaust duct connecting tube 34 are disposed between the connecting member 30 and the heat recovery ventilator 40, such that the heat recovery ventilator 40 can be securely connected to the duct member 30.

In the heat recovery ventilator 40, outdoor air to the air cleaning unit 10 exchanges heat with indoor air from the air cleaning unit 10. Therefore, the temperature of an indoor area is not rapidly fluctuated by the outdoor air supplied from an outdoor area to the indoor area. For example, when the indoor temperature is higher than the outdoor temperature, heat is transferred from the indoor air discharged from the air cleaning unit 10 to the outdoor air to decrease temperature difference between the indoor area and the outdoor air supplied to the indoor area, thereby preventing temperature fluctuation in the indoor area.

Specifically, the heat recovery ventilator 40 includes an exhaust inlet 42 formed on one side, a supply outlet 43 formed at a predetermined distance from the exhaust inlet 42, an exhaust outlet 44 formed on the opposite side to the exhaust inlet 42, a supply inlet 45 formed on the opposite side to the supply outlet 43, and an heat exchanger 41.

More specifically, in the heat exchanger 41, heat exchanging occurs between inflow of outdoor air and outflow of indoor air but mixing does not occur between the outdoor air and the indoor air.

The heat recovery ventilator 40 further includes an exhaust fan 47 installed in a tube between the exhaust inlet 42 and the exhaust outlet 44, and a supply fan 46 installed between a tube between the supply inlet 45 and the supply outlet 43.

In detail, the exhaust inlet 42 and the supply outlet 43 are formed on the same side of the heat recovery ventilator 40, and the exhaust outlet 44 and the supply inlet 45 are formed on the same side of the ventilator 40. However, the positions of the exhaust inlet 42 and the supply outlet 43 or the exhaust outlet 44 and the supply inlet 45 can be changed according to the type of the heat recovery ventilator 40.

In more detail, the exhaust inlet 42 is connected to the exhaust duct connecting tube 34 to allow inflow of indoor air from the air cleaning unit 10, and the supply outlet 43 is connected to the supply duct connecting tube 33 to supply outdoor air to the air cleaning unit 10.

A user or an operator can use a button of the controller 90 to operate the air cleaning unit 10 and the heat recovery ventilator 40 individually or in conjunction with each other. In other words, when a user selects ventilation mode, the air cleaning unit 10 operates together with the heat recovery ventilator 40, such that an indoor area can be ventilated. When the user selects cleaning mode, only the air cleaning unit 10 operates. In this case, outdoor air is not introduced into the indoor area but indoor air is cleaned by the air cleaning unit 10 and discharged back to the indoor area from the air cleaning unit 10.

A CO₂ sensor or a volatile organic compounds (VOC) sensor is installed in the air cleaning unit 10. In detail, as a way of evaluating air pollution, the CO₂ sensor is used to measure the CO₂ level of an indoor air. The VOC sensor measures the VOC level of the indoor air for determining how much harmful substances are contained in the indoor air. Here, the term VOC (volatile organic compounds) is used to denote all kinds of organic compounds that are contained in air in gas phase. The VOC can be in solid or liquid state under room temperature/pressure. High VOC level causes painful symptoms or diseases such as respiratory diseases, allergic diseases, and headaches. In addition, a gas sensor can be installed in the air cleaning unit 10 or on a wall for sensing other harmful gases except the VOC. The gas sensor can be connected to a control portion of the air cleaning unit 10 via radio waves. The pollution level of the indoor air can be measured using sensor signals from the sensors, and the air cleaning unit 10 can be automatically operated in ventilation mode and/or cleaning mode based on the measured pollution level.

An air flow of the air conditioning system will now be described.

When ventilation mode is selected by a user or automatically in response to a sensor signal, the fan 15 of the air cleaning unit 10, and the supply and exhaust fans 46 and 47 of the heat recovery ventilator 40 are driven. Outdoor air is sucked into the heat recovery ventilator 40 by the operation of the supply fan 46, and indoor air is sucked into the heat recovery ventilator 40 by the operation of the exhaust fan 47. The sucked outdoor air and indoor air exchange heat with each other while passing through the heat exchanger 41 installed in the heat recovery ventilator 40. Then, the outdoor air is introduced into the air cleaning unit 10 through the supply duct 31 and cleaned by the filter 13 installed in the air cleaning unit 10. After that, the outdoor air is discharged to an indoor area through the discharge grill 141 of the grill 14.

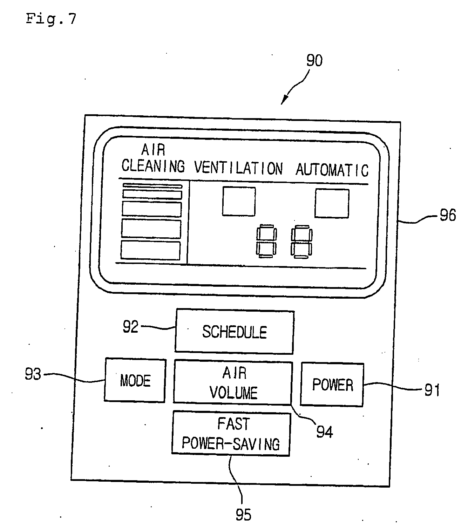

Fig. 7 is a plan view of the controller 90 of the air conditioning system according to the present invention.

Referring to Fig. 7, the controller 90 is connected to the air cleaning unit 10 via a cable or radio waves.

In detail, the air cleaning unit 10 includes a remote signal receiver on a front side for receiving manipulation/instruction signals from the controller 90. The remote signal receiver sends the received signals to a control portion of the air cleaning unit 10. The control portion can control components of the air cleaning unit 10 such as the fan 15 according to instructions contained in the signals.

In more detail, the controller 90 includes a display window 96 for showing operational states of the air conditioning system, a power key 91 for receiving start and stop instructions from a user, a scheduler key 92 for scheduling the operation of the air conditioning system, a mode selection key 93 for selecting ventilation mode or cleaning mode, a air volume control key 94 for controlling air volume outputs of the fans installed in the air cleaning unit 10 and the heat recovery ventilator 40, and a fast/power-saving selection key 95 for selecting a fast operation or a power-saving operation.

The fast operation function selectable using the fast/power-saving selection key 95 is provided for two purposes. For a first purpose, the supply fan 46 is driven at a higher speed than the exhaust fan 47 to introduce a larger amount of air from an outdoor area into an indoor area than the amount of air discharged from the indoor area to the outdoor area, such that the chance of polluted outdoor air flowing directly into the indoor area through other passages such as a window can be reduced. For a second purpose, the exhaust fan 47 is driven at a higher speed than the supply fan 46 to discharge a large amount of air to the outdoor area than the amount of air introduced from the outdoor area into the indoor area, such that polluted indoor air can be rapidly discharged to the outdoor area.

A user can operate the air conditioning system using the power key 91 and select cleaning mode, ventilation mode, or a combination mode of the cleaning mode and the ventilation mode using the mode selection key 93. Further, the user can control the speeds of the fans installed in the air conditioning system.

In detail, a user can select a desired operating mode between cleaning mode, ventilation mode, and automatic mode by pressing the mode selection key 93 one or more times. In other words, when the power key 91 is first pressed, the air conditioning system starts operation in cleaning mode (default mode). The cleaning mode can be changed into the automatic mode by pressing the mode selection key 93 two times. Although the cleaning mode, ventilation mode, and the automatic mode are selected in this order, they can be selected in different orders.

The air volume outputs of the fans can be selected between strong, very strong, and slow using the air volume control key 94. The order of the selectable air volume output options can be changed.

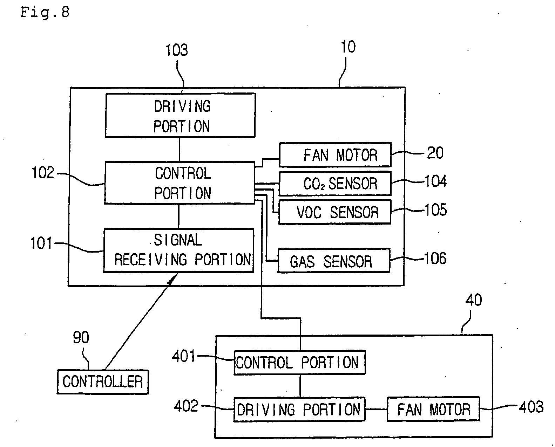

Fig. 8 is a block diagram of the air conditioning system according to the present invention.

Referring to Fig. 8, the air conditioning system of the present invention is configured with the air cleaning unit 10, the controller 90, and the heat recovery ventilator 40 as described above.

In detail, the air cleaning unit 10 includes a signal receiving portion 101 receiving instruction signals from the controller 90, a control portion 102 receiving instructions from the signal receiving portion 101, and a driving portion 103 controlled by the control portion 102. The driving portion 103 drives the fan motor 20 in response to a control signal. A CO₂ sensor 104, a VOC sensor, and a gas sensor 106 are connected to the control portion 102, such that signals regarding pollution level detected by the sensors 104, 105, and 106 can be transmitted to the control portion 102. The control portion 102 automatically controls the air volume outputs of fans using the sensor signals.

The heat recovery ventilator 40 includes a control portion 401 receiving control signals from the control portion 102 of the air cleaning unit 10, and a driving portion 402 controlled by the control portion 401. The driving portion 402 drives a fan motor 403 in response to a control signal. The fan motor 403 includes fan motors installed in the heat recovery ventilator 40 to drive the supply fan 46 and the exhaust fan 47.

In this configuration, when a user inputs an operating instruction through the controller 90, an instruction signal is transmitted to the signal receiving portion 101 of the air cleaning unit 10. The instruction signal is transmitted from the signal receiving portion 101 to the control portion 102. The control portion 102 controls the driving portion 103 according to the instruction signal. The driving portion 103 drives the fan motor 20 or other devices according to the control of the control portion 102. The control portion 102 of the air cleaning unit 10 can be connected to the control portion 401 of the heat recovery ventilator 40 via a cable or radio waves for signal communication. Further, the controller 90 can be connected to the control portion 102 of the air cleaning unit 10 via a cable or radio waves, as would be apparent to those of skill in the art.

Meanwhile, when a user inputs an instruction using the controller 90 for operating the air cleaning unit 10 in conjunction with the heat recovery ventilator 40, the control portion 102 of the air cleaning unit 10 transmits an operating instruction to the control portion 401 of the heat recovery ventilator 40. Then, the control portion 401 controls the driving portion 402 to drive the fan motor 403.

Hereinafter, a method of controlling the air conditioning system will be described in detail with reference to the accompanying flowcharts, with regard to an individual operation of the air cleaning unit 10, a combined operation of the air cleaning unit 10 and the heat recovery ventilator 40, and an automatic operation using a pollution sensor signal.

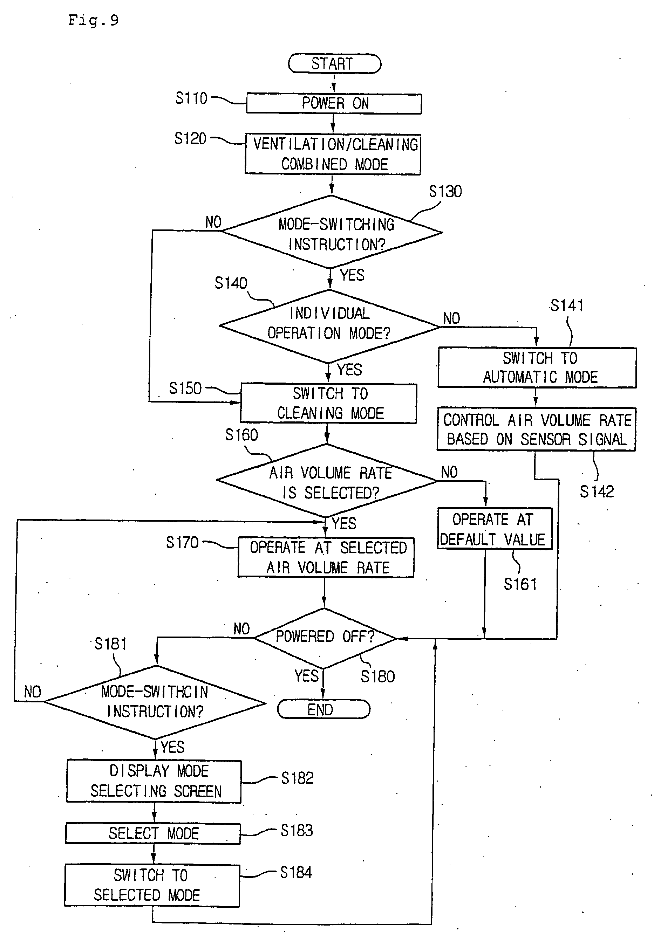

Fig. 9 is a flowchart illustrating a method of controlling the air conditioning system.

Referring to Fig. 9, when a user presses the power key 91 of the controller 90, the air cleaning unit 10 and the heat recovery ventilator 40 are powered on (S110).

Here, when the power key 91 is pressed to operate the air conditioning system, ventilation/cleaning combined mode is performed as default mode (S120). Therefore, when the air conditioning system is powered on by a user, the air cleaning unit 10 and the heat recovery ventilator 40 are operated in conjunction with each other (S120). Alternatively, the air conditioning system can be set for a user to select desired mode when the user starts up the air conditioning system. In detail, a user can power on the air conditioning system and select combined mode, individual operation mode, or automatic mode using the mode selection key 93.

The control portion 102 of the air cleaning unit 10 determines whether a mode-switching instruction is input using the mode selection key 93 of the controller 90 (S130). If so, the control portion 102 determines whether an individual cleaning mode is selected by the mode-switching instruction (S140). If the individual cleaning mode is selected, the air conditioning system switches to the individual cleaning mode (S150). If the individual cleaning mode is not selected, the air conditioning system switches to automatic mode (S141).

Meanwhile, if a mode-switching instruction is not input in operation S130 or the air conditioning system switches from the ventilation/cleaning combined mode to the individual cleaning mode in operation S150, the control portion 102 determines whether an air volume rate is selected (S160).

If so, a fan of the air conditioning system is driven at the selected air volume rate (S170). If not, the fan is driven at a default air volume rate (S161). Here, the default air volume rate is a rate set in the default ventilation/cleaning combined mode (S120).

If the air conditioning system switched to the automatic mode in operation S141, the air volume rate of the fan is automatically set according to a pollution level detected by sensors installed inside or outside the air cleaning unit 10 (S142).

While the fan is driven, the control portion 102 monitors whether the air conditioning system is powered off (S180). In case where the operation time of the air conditioning system is preset, the control portion 102 automatically terminates the operation of the air conditioning system after the preset operation time.

If the air conditioning system is powered off, the operation of the air conditioning system is terminated. If not, the control portion 102 determines whether a mode-switching instruction is input (S181).

If a mode-switching instruction is not input, the air conditioning system continues to operate at the selected air volume rate in the selected mode. On the contrary, if a mode-switching instruction is input, other modes except the selected mode are displayed on the display window 96 of the controller 90 (S182). One of the displayed modes can be selected by pressing the mode selection key 93 one or more times (S183). If one of the displayed modes is selected, the air conditioning system switches to the selected mode (S184). Then, the control portion 102 goes back to operation S180 to monitor whether the air conditioning system is powered off.

With the above-described method, a user can select the individual cleaning mode or the ventilation/cleaning combined mode according to the pollution level of indoor air. Further, the user can select the automatic mode in which sensor signals are utilized. Therefore, indoor air can be comfortably maintained.

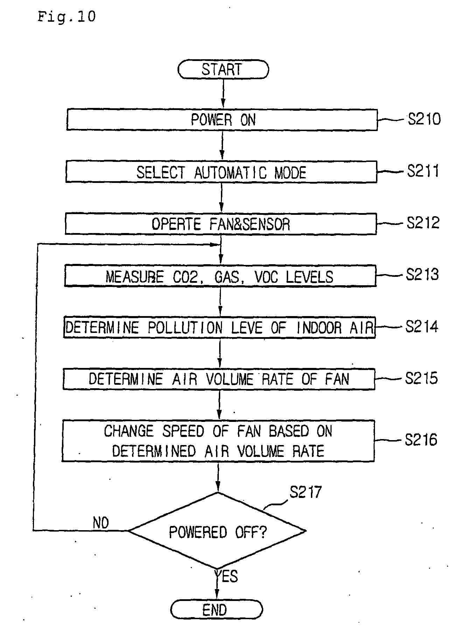

Fig. 10 is a flowchart illustrating a process of determining the air volume rate of a fan when an automatic mode is selected for the air conditioning system according to the present invention.

Referring to Fig. 10, a user presses the power key 91 of the controller 90 to power on the air conditioning system (S120). An automatic mode is selected by a user using a key or default settings (S211). In the automatic mode, the fan and the pollutant sensor of the air cleaning unit 10 and the heat recovery ventilator 40 are operated (S212). Here, it is preferable that ventilation and air cleaning be performed in conjunction with each other and the fan be driven at a predetermined RPM under default settings in the automatic mode. Alternatively, when the air conditioning system is powered on, the fan can be driven at a speed selected using a sensor signal.

Meanwhile, when the air conditioning system is powered on, the CO₂, VOC, and gas sensors measure pollutant levels of indoor air (S213). The measured pollutant levels are transmitted to the control portion 102 of the air cleaning unit 10. The control portion 102 determines the pollution level of indoor air using the received pollutant levels (S214). Then, the control portion 102 determines the air volume rate of the fan using the determined pollution level of the indoor air (S215). In detail, the control portion 102 stores a data table containing air volume rates with respect to pollution levels for determining the air volume rates of the fan.

The speed of the fan is set based on the determined air volume rate, and the fan is driven at the set speed (S216). The control portion determines whether a power-off instruction is input (S217). The power-off instruction may be input automatically after scheduled operating time is over or manually by a user using the power key 91. If a power-off instruction is input, the air conditioning system stops operation. If the power-off instruction is not input, operation S213 is repeated again for measuring pollutant levels. Then, operations S214, S215, S216, and S217 are repeated.

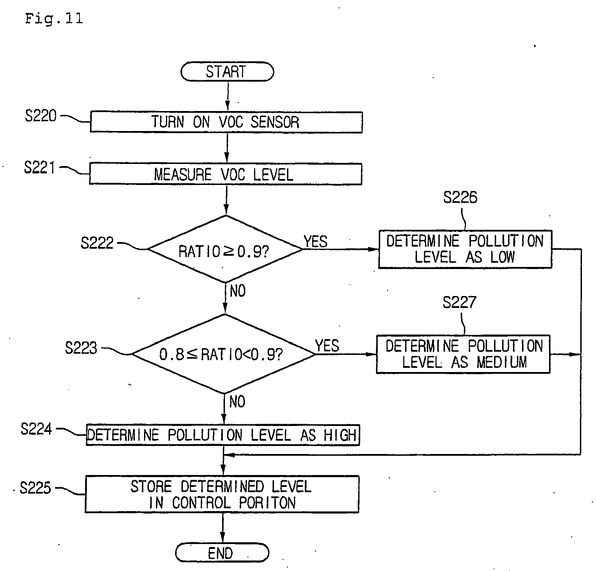

Fig. 11 is a flowchart illustrating a process of determining a pollution level using a VOC sensor when the air conditioning system operates in automatic mode.

Referring to Fig. 11, when the air conditioning system starts operation in automatic mode, the VOC sensor is powered on (S220).

The VOC sensor measures the VOC level of indoor air for determining the pollution level of the indoor air (S221).

The pollution level of the indoor air can be expressed using a ratio of a currently measured VOC level to a previously measured VOC level.

In detail, a current VOC level is determined as the average of measured VOC levels of the indoor air at intervals of 10 seconds for 2 minutes. Then, the current VOC level (average VOC level) is compared with a reference level to evaluate the pollution level of the indoor air and determine the air volume rate of the fan using the evaluated pollution level. Here, the VOC level of the indoor air is measured using the resistance of the VOC sensor that varies according to the VOC level.

For example, the resistance values of the VOC sensor are measured at intervals of 10 seconds for 2 minutes, and the average of the measured resistance values is calculated as an initial VOC sensor resistance Ro. Then, in the same way, the resistance values of the VOC sensor are measured, and the average of the measured resistance values is calculated as a current VOC sensor resistance Rₛ. After that, a pollution level of the indoor air is determined by comparing a ratio of Rₛ/R₀ with a reference value. It is considered that the pollution level of the indoor air becomes lower as the ratio of Rₛ/R₀ increases.

Referring to Table 1 below, it is determined whether the ratio of Rₛ/R₀ is equal to or larger than 0.9 (S222). If so, the pollution level of the indoor air is determined to be low (S226). If not, it is determined whether the ratio of Rₛ/R₀ is within a. range equal to or larger than 0.8 but smaller than 0.9 (0.8≤Rₛ/R₀<0.9) (S223). If so, the pollution level of the indoor air is determined to be medium (S227). If not, the pollution level of the indoor air is determined to be high (S224). The determined pollution level grade is stored in the control portion 102 (S225).

**[Table 1]**

| Rₛ/R₀ | Pollution level grade | Pollution level |
|---|---|---|
| 0.9≤ Rₛ/R₀ | Low | ≤ 38 |
| 0. 8≤ Rₛ/R₀<0. 9 | Medium | ≤ 65 |
| Rₛ/R₀<0.8 | High | 65< |

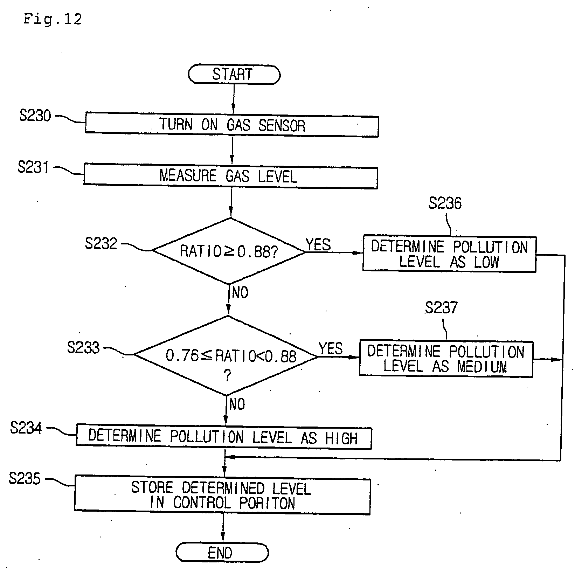

Fig. 12 is a flowchart illustrating a process of determining a pollution level using a gas sensor when the air conditioning system operates in automatic mode according to the present invention.

Referring to Fig. 12, when the air conditioning system starts operation in automatic mode, the gas sensor is powered on (S230).

The gas sensor measures the harmful gas level of indoor air (S231). A ratio of Rₛ/R₀ is calculated using the measured gas level in the same way as shown in Fig. 11, and the pollution level of the indoor air is determined using the calculated Rₛ/R₀ ratio. Like the process of determining the pollution level of indoor air using the VOC sensor, it is considered that the pollution level of the indoor air becomes lower as the ratio of Rₛ/R₀ increases.

**[Table 2]**

| Rₛ/R₀ | Pollution level grade | Pollution level |
|---|---|---|
| 0.88≤Rₛ/R₀ | Low | ≤ 38 |
| 0.76≤Rₛ/R₀<0.88 | Medium | ≤ 65 |
| Rₛ/R₀<0.76 | High | 65< |

Referring to Table 2, it is determined whether the ratio of Rₛ/R₀ is equal to or larger than 0.88 (S232). If so, the pollution level of the indoor air is determined to be low (S236). If not, it is determined whether the ratio of Rₛ/R₀ is within a range equal to or larger than 0.76 but smaller than 0.88 (0.76≤Rₛ/R₀<0.88) (S233). If so, the pollution level of the indoor air is determined to be medium (S237). If not, the pollution level of the indoor air is determined to be high (S234). The determined pollution level grade is stored in the control portion 102 (S235).

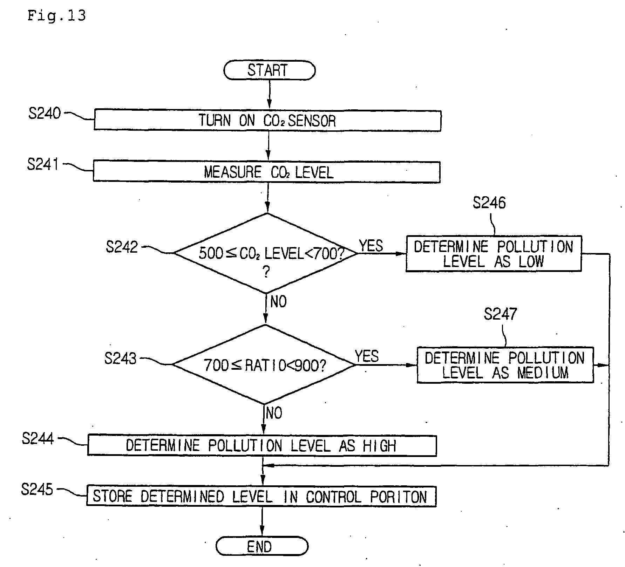

Fig. 13 is a flowchart illustrating a process of determining a pollution level using a CO₂ sensor when the air conditioning system operates in automatic mode.

Referring to Fig. 13, when the air conditioning system starts operation in automatic mode, the CO₂ sensor is powered on (S290). The CO₂ sensor measures the CO₂ level of indoor air (S241). The pollution level of the indoor air is determined using the CO₂ level measured by the CO₂ sensor.

**[Table 3]**

| | |
|---|---|
| CO₂ level (ppm) | Pollution level grade |
| 500≤CO₂<700 | Low |
| 700≤CO₂<900 | Medium |
| 900≤CO₂ | High |

Referring to Table 3, it is determined whether the measured CO₂ level is within a range equal to or larger than 500 ppm but lower than 700 ppm (S242). If so, the pollution level of the indoor air is determined to be low (S246). If not, it is determined whether the CO₂ level is within a range equal to or larger than 700 ppm but lower than 900 ppm (S243). If so, the pollution level of the indoor air is determined to be medium (S247). If not, the pollution level of the indoor air is determined to be high (S244).

The pollution level grade of the indoor air determined in the above-described manner is stored in the control portion 102 (S245).

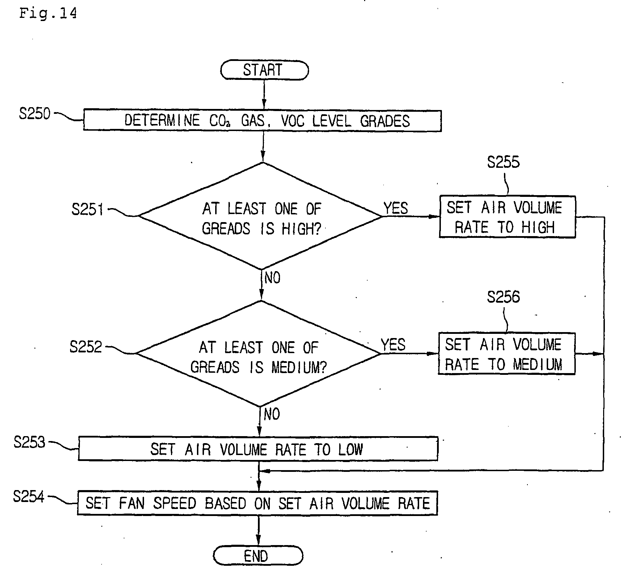

Fig. 14 is a flowchart illustrating a process of determining the air volume rate of a fan when the air conditioning system operates in automatic mode.

Referring to Fig. 14, When the air conditioning system is operated in automatic mode, a cleaning operation or a cleaning/ventilation combined operation is performed by the air cleaning unit 10 or a combination of the air cleaning unit 10 and the heat recovery ventilator 40 according to the pollutant levels of indoor air measured by the CO₂ sensor, the gas sensor, and the VOC sensor.

Specifically, in the automatic mode, pollution level grades of indoor air are determined using pollutant levels measured by the CO₂ sensor, the gas sensor, and the VOC sensor (S250). The pollution level grades of the indoor air, which are respectively determined using the pollutant levels measured by the three sensors, are compared with data, which are stored in the control portion 102 and containing air volume rates with respect to pollution level grades, in order to determine the air volume rate of a fan.

**[Table 4]**

| **CO₂** | **GAS** | **VOC** | **FAN** |
|---|---|---|---|
| High | High | High | Strong |
| High | High | Medium | Strong |
| High | High | Low | Strong |
| High | Medium | High | Strong |
| High | Medium | Medium | Strong |
| High | Medium | Low | Strong |
| High | Low | High | Strong |
| High | Low | Medium | Strong |
| High | Low | Low | Strong |
| Medium | High | High | Strong |
| Medium | High | Medium | Strong |
| Medium | High | Low | Strong |
| Medium | Medium | High | Strong |
| Medium | Medium | Medium | Medium |
| Medium | Medium | Low | Medium |
| Medium | Low | High | Strong |
| Medium | Low | Medium | Medium |
| Medium | Low | Low | Medium |
| Low | High | High | Strong |
| Low | High | Medium | Strong |
| Low | High | Low | Strong |
| Low | Medium | High | Strong |
| Low | Medium | Medium | Medium |
| Low | Medium | Low | Medium |
| Low | Low | High | Strong |
| Low | Low | Medium | Medium |
| Low | Low | Low | Low |

Referring to Table 3, pollution level grades obtained using the three sensors are used to determine the air volume rate of the fan.

In detail, the control portion 102 of the air cleaning unit 10, which is connected to the three sensors, determines whether at least one of the pollution level grades is high (S251). If so, the air volume rate of the fan is set to strong (S255). If not, the control portion 102 determines whether at least one of the pollution level grades is medium (S252). If so, the air volume rate of the fan is set to medium (S256). If not, the air volume rate of the fan is set to low (S253). The air volume rates of the fans of the air cleaning unit 10 and the heat recovery ventilator 40 are set to the determined rate (S254). Thus, the fans are driven at the set air volume rate.

In the above-described method, when a user selects automatic mode of the air conditioning system, the pollution level of indoor air is measured in real time to determine an optimized air volume rates of the fans, so that indoor air can be maintained at an optimal state.

As described above, according to the present invention, ventilation and air cleaning can be provided at the same time or individually.

Further, a user can select operation mode of the air conditioning system using the controller, or the operation mode can be automatically selected depending on the air pollution level of indoor air for performing ventilation and air cleaning.

Furthermore, when air is supplied from an outdoor area to an indoor area, the amount of outdoor air can be properly controlled by the control portion depending on the temperature difference between indoor area and the indoor area, thereby decreasing heat loss.

In addition, the controller is connected to the air conditioning system via a cable or radio waves, so that the air conditioning system can be easily operated from a remote location.

According to the air conditioning system of the present invention, ventilation and air cleaning can be provided at the same time or individually. Further, the ventilation and air cleaning can be automatically performed according to the pollution level of the indoor air. Therefore, the present invention can be applied to various fields.

## Claims

1. An air conditioning system comprising:
a controller (90) for selecting an operation mode and an air volume rate;
an air cleaning unit (10) including a signal receiving portion (101) receiving instruction signals from the controller (90), a control portion (102) receiving the instruction from the signal receiving portion (101), and a driving portion (103) actuating a fan motor (20) and other components according to the instruction inputted to the control portion (102);
a heat recovery ventilator (40) including a control portion (401) receiving control signals from the control portion (102) of the air cleaning unit (10), and a driving portion (402) actuating a fan motor (403) or other components according to an instruction from the control portion (401) of the heat recovery ventilator (40); and
a duct member (30) connecting the air cleaning unit (10) and the heat recovery ventilator (40), **characterized in that** the controller (90) includes:
a display window (96) for showing operational states of the air conditioning system;
a power key (91) for actuating a starting and stopping of the system when selected by a user;
a scheduler key (92) for scheduling the operation of the air conditioning system;
a mode selection key (93) for selecting ventilation mode and/or cleaning mode; an air volume control key (94) for actuating a control of air volume outputs of the fans installed in the air cleaning unit (10) and the heat recovery ventilator (40); and
a fast/power-saving selection key (95) for selecting a fast operation or a power-saving operation for the air conditioning system,
wherein the controller (90) and the control portion (102) of the air cleaning unit (10) are connected to each other via a cable or radio waves.

2. The air conditioning system according to claim 1, wherein when the instruction inputted using the controller (90) is an individual operation mode instruction, the control portion (102) of the air cleaning unit (10) operates only the air cleaning unit.

3. The air conditioning system according to claim 1, wherein when the instruction inputted using the controller (90) is a combination mode instruction, the air cleaning unit (10) and the heat recovery ventilator (40) are simultaneously operated.

4. The air conditioning system according to claim 3, wherein the control portion (102) of the air cleaning unit sends an operation instruction to the control portion (401) of the heat recovery ventilator (40) in the combination mode.

5. The air conditioning system according to claim 1, wherein the control portions (102,401) of the air cleaning unit and the heat recovery ventilator (40) are connected to each other via a cable or radio waves.

6. The air conditioning system according to claim 1, further comprising at least one pollutant sensor installed inside or outside the air cleaning unit (10) for measuring a pollutant level of indoor air and sending the result to the control portion of the air cleaning unit (10).

7. The air conditioning system according to claim 6, wherein the pollutant sensor comprises at least one of a CO₂ sensor (104) measuring a CO₂ level, a VOC (volatile organic compounds) sensor (105) measuring a VOC level, and a gas sensor (106) measuring harmful gas levels except for the CO₂ and VOC levels.

8. The air conditioning system according to claim 7, wherein at least one of the sensors is installed inside or outside the air cleaning unit (10) in connection with the control portion (102) of the air cleaning unit (10).

9. The air conditioning system according to claim 6, wherein the control portion (102) of the air cleaning unit (10) receives the pollutant level measured by the pollutant sensor to control an air volume rate of the air conditioning system according to the pollutant level.

10. The air conditioning system according to claim 6, wherein the control portion (102) of the air cleaning unit (10) controls an air volume rate of the air conditioning system based on the highest pollutant level among pollutant levels measured by the pollutant sensor.

## Patentansprüche

1. Klimatisierungssystem, das umfasst:
eine Steuereinheit (90) zum Auswählen einer Betriebsart und eines Luftvolumendurchflusses;
eine Luftreinigungseinheit (10), die einen Signalempfangsabschnitt (101), der Befehlssignale von der Steuereinheit (90) empfängt, einen Steuerabschnitt (102), der den Befehl von dem Signalempfangsabschnitt (101) empfängt, und einen Ansteuerabschnitt (103), der einen Gebläsemotor (20) und andere Komponenten entsprechend dem in den Steuerabschnitt (102) eingegebenen Befehl betätigt, enthält;
einen Wärmerückgewinnungsventilator (40), der einen Steuerabschnitt (401), der Steuersignale von dem Steuerabschnitt (102) der Luftreinigungseinheit (10) empfängt, und einen Ansteuerungsabschnitt (402), der einen Gebläsemotor (403) oder andere Komponenten entsprechend einem Befehl von dem Steuerabschnitt (401) des Wärmerückgewinnungsventilators (40) betätigt, enthält; und
ein Rohrelement (30), das die Luftreinigungseinheit (10) und den Wärmerückgewinnungsventilator (40) verbindet, **dadurch gekennzeichnet, dass** die Steuereinheit (90) Folgendes umfasst:
ein Anzeigefenster (96) zum Zeigen von Betriebszuständen des Klimatisierungssystems;
eine Einschalttaste (91) zum Ausführen eines Startens und Stoppens des Systems, wenn sie durch einen Anwender gewählt wird;
eine Zeitplanungstaste (92) zum zeitlichen Planen des Betriebs des Klimatisierungssystems;
eine Betriebsartauswahltaste (93) zum Auswählen einer Lüftungsbetriebsart und/oder einer Reinigungsbetriebsart; und eine Luftvolumen-Steuertaste (94) zum Ausführen einer Steuerung von Luftvolumenausgängen der Gebläse, die in der Luftreinigungseinheit (10) und in dem Wärmerückgewinnungsventilator (40) installiert sind; und
eine Schnellbetrieb-/Energiesparbetrieb-Auswahltaste (95) zum Auswählen eines schnellen Betriebs oder eines Energiesparbetriebs für das Klimatisierungssystem,
wobei die Steuereinheit (90) und der Steuerabschnitt (102) der Luftreinigungseinheit (10) über Kabel oder Funkwellen miteinander verbunden sind.

2. Klimatisierungssystem nach Anspruch 1, wobei dann, wenn der unter Verwendung der Steuereinheit (90) eingegebene Befehl ein Befehl für individuelle Betriebsart ist, der Steuerabschnitt (102) der Luftreinigungseinheit (10) nur die Luftreinigungseinheit betreibt.

3. Klimatisierungssystem nach Anspruch 1, wobei dann, wenn der unter Verwendung der Steuereinheit (90) eingegebene Befehl ein Kombinationsbetriebsartbefehl ist, die Luftreinigungseinheit (10) und der Wärmerückgewinnungsventilator (40) gleichzeitig betrieben werden.

4. Klimatisierungssystem nach Anspruch 3, wobei der Steuerabschnitt (102) der Luftreinigungseinheit einen Betuebsbefehl zu dem Steuerabschnitt (401) des Wärmerückgewinnungsventilators (40) in der Kombinationsbetriebsart sendet.

5. Klimatisierungssystem nach Anspruch 1, wobei die Steuerabschnitte (102, 401) der Luftreinigungseinheit und des Wärmerückgewinnungsventilators (40) über ein Kabel oder Funkwellen miteinander verbunden sind.

6. Klimatisierungssystem nach Anspruch 1, das ferner wenigstens einen Schadstoffsensor enthält, der innerhalb oder außerhalb der Luftreinigungseinheit (10) installiert ist, um einen Schadstoffpegel von Innenluft zu messen und um das Ergebnis zu dem Steuerabschnitt der Luftreinigungseinheit (10) zu senden.

7. Klimatisierungssystem nach Anspruch 6, wobei der Schadstoffsensor einen CO₂-Sensor (104), der einen CO₂-Pegel misst, und/oder einen VOC-Sensor (Sensor für flüchtige organische Verbindungen) (105), der einen VOC-Pegel misst, und/oder einen Gas-) sensor (106), der Pegel schädlicher Gase mit Ausnahme von CO₂- und VOC-Pegeln misst.

8. Klimatisierungssystem nach Anspruch 7, wobei wenigstens einer der Sensoren innerhalb oder außerhalb der Luftreinigungseinheit (10) in Verbindung mit dem Steuerabschnitt (102) der Luftreinigungseinheit (10) installiert ist.

9. Klimatisierungssystem nach Anspruch 6, wobei der Steuerabschnitt (102) der Luftreinigungseinheit (10) den Schadstoffpegel, der durch den Schadstoffsensor gemessen wird, empfängt, um eine Luftvolumendurchflussmenge des Klimatisierungssystems in Übereinstimmung mit dem Schadstoffpegel zu steuern.

10. Klimatisierungssystem nach Anspruch 6, wobei der Steuerabschnitt (102) der Luftreinigungseinheit (10) eine Luftvolumendurchflussmenge des Klimatisierungssystems anhand des höchstens Schadstoffpegels unter den durch den Schadstoffsensor gemessenen Schadstoffpegeln steuert.

## Revendications

1. Système de conditionnement d'air comprenant :
un contrôleur (90) pour sélectionner un mode de fonctionnement et un débit d'air volumétrique ;
une unité de purification d'air (10) incluant une portion de réception de signal (101) recevant des signaux d'instruction depuis le contrôleur (90), une portion de commande (102) recevant l'instruction depuis la portion de réception de signal (101), et une portion d'entraînement (103) actionnant un moteur de ventilateur (20) et d'autres composants en accord avec l'instruction injectée à la portion de commande (102) ;
un ventilateur de récupération de chaleur (40) incluant une portion de commande (401) recevant des signaux de commande depuis la portion de commande (102) de l'unité de purification d'air (10), et une portion d'entraînement (402) actionnant un moteur de ventilateur (403) ou d'autres composants en accord avec une instruction depuis la portion de commande (401) du ventilateur de récupération de chaleur (40) ; et
un élément de conduit (30) qui connecte l'unité de purification d'air (10) et le ventilateur de récupération de chaleur (40), **caractérisé en ce que** le contrôleur (90) inclut :
une fenêtre d'affichage (96) pour montrer des états de fonctionnement du système de conditionnement d'air ;
une clé de mise en marche (91) pour actionner un démarrage et un arrêt du système lorsque cela est sélectionné par un utilisateur ;
une clé de programmation (92) pour programmer le fonctionnement du système de conditionnement d'air ;
une clé de sélection de mode (93) pour sélectionner un mode de ventilation et/ou un mode de purification ; une clé de contrôle de volume d'air (94) pour actionner un contrôle des volumes d'air en sortie des ventilateurs installés dans l'unité de purification d'air (10) et du ventilateur de récupération de chaleur (40) ; et
une clé de sélection marche rapide/économie d'énergie (95) pour sélectionner un fonctionnement en marche rapide ou un fonctionnement en économie d'énergie pour le système de conditionnement d'air,
dans lequel le contrôleur (90) et la portion de commande (102) de l'unité de purification d'air (10) sont connectés l'un à l'autre via un câble ou via des ondes radio.

2. Système de conditionnement d'air selon la revendication 1, dans lequel, quand l'instruction injectée en utilisant le contrôleur (90) est une instruction de mode de fonctionnement individuel, la portion de commande (102) de l'unité de purification d'air (10) fait fonctionner uniquement l'unité de purification d'air.

3. Système de conditionnement d'air selon la revendication 1, dans lequel quand l'instruction injectée en utilisant le contrôleur (90) est une instruction de mode combiné, l'unité de purification d'air (10) et le ventilateur de récupération de chaleur (40) sont mis simultanément en fonctionnement.

4. Système de conditionnement d'air selon la revendication 3, dans lequel la portion de commande (102) de l'unité de purification d'air envoie une instruction de fonctionnement à la portion de commande (401) du ventilateur de récupération de chaleur (40) dans le mode combiné.

5. Système de conditionnement d'air selon la revendication 1, dans lequel les portions de commande (102, 401) de l'unité de purification d'air et du ventilateur de récupération de chaleur (40) sont connectées l'une à l'autre via un câble ou via des ondes radio.

6. Système de conditionnement d'air selon la revendication 1, comprenant en outre au moins un détecteur de produits polluants installé à l'intérieur ou à l'extérieur de l'unité de purification d'air (10) pour mesurer un niveau de produits polluants de l'air intérieur et envoyer le résultat à la portion de commande de l'unité de purification d'air (10).

7. Système de conditionnement d'air selon la revendication 6, dans lequel le détecteur de produits polluants comprend au moins un capteur parmi un capteur de CO₂ (104) qui mesure un niveau de CO₂, un capteur de composés organiques volatiles (105) qui mesure un niveau de composés organiques volatiles, et un détecteur de gaz (106) qui mesure des niveaux de gaz nocifs, à l'exception des niveaux de CO₂ et de composés organiques volatiles.

8. Système de conditionnement d'air selon la revendication 7, dans lequel l'un au moins des capteurs est installé à l'intérieur ou à l'extérieur de l'unité de purification d'air (10) en association avec la portion de commande (102) de l'unité de purification d'air (10).

9. Système de conditionnement d'air selon la revendication 6, dans lequel la portion de commande (102) de l'unité de purification d'air (10) reçoit le niveau de produits polluants mesuré par le détecteur de produits polluants pour commander un débit volumétrique d'air du système de conditionnement d'air selon le niveau de produits polluants.

10. Système de conditionnement d'air selon la revendication 6, dans lequel la portion de commande (102) de l'unité de purification d'air (10) commande un débit volumétrique d'air du système de conditionnement d'air en se basant sur le plus haut niveau de produits polluants parmi les niveaux de produits polluants mesurés par le détecteur de produits polluants.
